# EUROPEAN PATENT SPECIFICATION

(11) **EP 2 330 282 B1**
(45) Date of publication and mention of the grant of the patent: **26.04.2023**
(21) Application number: 09817417.0
(22) Date of filing: 17.09.2009
(51) Int. Cl.: F02D 41/00, F02D 41/14, F02B 19/10, F02B 19/12, F02M 21/02, F02D 19/02, F02D 35/02, F02B 43/00

(54) **CONTROLLER OF GAS ENGINE**
GASMOTORSTEUERUNG
RÉGULATEUR DE MOTEUR À GAZ

(30) Priority: 01.10.2008 JP 2008256097
(43) Date of publication of application: 08.06.2011
(73) Proprietor: Kawasaki Jukogyo Kabushiki Kaisha, Kobe-shi, Hyogo 650-8670 (JP)
(72) Inventor: IMAMURA, Tsukasa, Kobe-shi, Hyogo 650-8670 (JP); SUGIMOTO, Tomohiko, Kobe-shi, Hyogo 650-8670 (JP); TOKUOKA, Tetsuo, Kobe-shi, Hyogo 650-8670 (JP); ISHII, Hiroyoshi, Kobe-shi, Hyogo 650-8670 (JP)
(74) Representative: Leinweber & Zimmermann
(86) International application number: PCT/JP2009/004687
(87) International publication number: WO 2010/038374

(56) References cited:
- JP-A- 7 083 094
- JP-A- 10 110 640
- JP-A- 2004 076 624
- JP-A- 2004 076 624
- US-A1- 2004 003 805

## Description

### Technical Field

The present invention relates to a control system for a reciprocating gas engine using as a main fuel a gas fuel such as a natural gas or a city gas.

### Background Art

For example, a multi-cylinder gas engine used in power generation equipment, etc., is provided with fuel feed valves for injecting a gas fuel such that the fuel feed valves respectively correspond to the cylinders. Each fuel feed valve is drivably controlled to feed the gas fuel with a proper amount. In this way, the engine is operative under a desired load.

In such a gas engine, an ignition timing is controlled as well as the control of a fuel feed amount. Depending on how the ignition timing is set, a knocking might occur. In such cases, for a cylinder in which the knocking has occurred, the fuel feeding is stopped or reduced.

For example, as disclosed in patent literature 1, a control system for a gas engine is known, which is configured to drivably control a fuel feed valve according to an exhaust gas temperature of each cylinder, in view of the fact that a load placed on the cylinder affects its exhaust gas temperature. This control system is configured to calculate an average value of exhaust gas temperatures of respective cylinders, reduce a fuel feed amount of a cylinder whose exhaust gas temperature is higher than the average value, and increase a fuel feed amount of a cylinder whose exhaust gas temperature is lower than the average value. In other words, in the conventional control system, the fuel feed amounts for all of the cylinders are controlled to be changed all together according to their exhaust gas temperatures.
Patent Literature 1: Patent No. 4094380 Publication
US 2004/0003805 A1 discloses an engine exhaust temperature controlling method. According to said method, the exhaust temperatures of the cylinders of the engine are sampled at predetermined intervals, an average of the exhaust temperatures is calculated, the load factor at this point is determined, the average exhaust temperature is compared with the exhaust temperature of each cylinder, and it is determined whether a temperature deviation is greater or smaller than a set deviation for that load factor. When the deviation is smaller, the exhaust temperature is within the set deviation and there is no need to adjust the fuel spray period. However, when the deviation is greater it is determined whether to increase or reduce the opening period of the electronic fuel spray valve.

### Summary of the Invention

### Technical Problem

In a case where the fuel feed amounts of all of the cylinders are changed simultaneously according to the exhaust gas temperatures, a desired engine power output is not necessarily implemented due to a characteristic variation among the cylinders and such control could sometimes interfere with engine power output control. To be specific, although the fuel feed amount is decided to allow the engine to operate under a desired load, the fuel feeding with a feed amount decided by the engine power output control is not implemented because of the exhaust gas temperature control. Although control for changing the fuel feed amount or the ignition timing according to misfire or occurrence of knocking has been proposed, there is a likelihood that, if such control is used with the above control based on the exhaust gas temperature, these controls might interfere with each other and become unstable. Furthermore, in the multi-cylinder gas engine, there is sometimes a variation between loads placed on the respective cylinders because of various factors associated with its structure, even if an air-fuel mixture is combusted with an equal fuel feed amount and at the same ignition timing. This is unfavorable in protection and management of the engine. In addition, a cylinder placed under an excessive load in a high-load range, appears, which significantly affects a life of the engine.

Accordingly, an object of the present invention is to suppress a variation in exhaust gas temperature between cylinders to equalize loads placed on the cylinders to make them close to an equal one and minimize interference with another control.

### Solution to Problem

The present invention has been made in view of the above circumstances. According to the invention, the above object is achieved by a control system for a gas engine according to claim 1. Preferred embodiments are claimed in subclaims 2 to 4.

In such a configuration, the cylinders whose fuel feed amounts should be changed are limited to the higher-temperature cylinder of the first predetermined number including the cylinder whose exhaust gas temperature is highest and the lower-temperature cylinder of the second predetermined number including the cylinder whose exhaust gas temperature is lowest, and there is a cylinder whose fuel feed amount is not changed. This makes it possible to equalize the exhaust gas temperatures of the cylinders to make them close to an equal one while minimizing the number of cylinders whose fuel feed amounts should be changed. As a result, it is possible to equalize the loads placed on the respective cylinders to make them close to an equal one while minimizing interference with another control.

The controller may be configured to, in the load equalization control, calculate an average value of exhaust gas temperatures of the cylinders which are the controlled targets, and decide a change amount of the fuel feed amount of the higher-temperature cylinder of the first predetermined number based on a deviation between the average value and the exhaust gas temperature of the higher-temperature cylinder, and a change amount of the fuel feed amount corresponding to the lower-temperature cylinder of the second predetermined number, based on a deviation between the average value and the exhaust gas temperature of the lower-temperature cylinder. In such a configuration, since the fuel feed amount is decided according to the magnitude of the deviation with respect to the average value, the exhaust gas temperature of the cylinder whose fuel feed amount should be changed can be made closer to the average value effectively.

The controller may be configured to, in the load equalization control, calculate an average value of exhaust gas temperatures of the cylinders which are the controlled targets; and the controller may be configured not to change the fuel feed amount of the higher-temperature cylinder of the first predetermined number if a deviation between the average value and the exhaust gas temperature of the higher-temperature cylinder is less than a predetermined value, and not to change the fuel feed amount of the lower-temperature cylinder of the second predetermined number if a deviation between the average value and the exhaust gas temperature of the lower-temperature cylinder is less than the predetermined value. In such a configuration, since the fuel feed amount of the cylinder whose exhaust gas temperature is significantly far from the average value, is changed, interference with another controller can be lessened.

Each of the first predetermined number and the second predetermined number is 1. In such a configuration, since the fuel feed amount of the cylinder whose exhaust gas temperature is highest and the fuel feed amount of the cylinder whose exhaust gas temperature is lowest are changed, interference with another control may be further lessened.

The controller may be configured to, in the load equalization control, select the higher-temperature cylinder of the first predetermined number, and the lower-temperature cylinder of the second predetermined number, among the cylinders which are the controlled targets, in every predetermined period, and to continue to change the fuel feed amounts of the selected cylinders for the predetermined period. In such a configuration, it is possible to ensure a period for which the exhaust gas temperature is changed into a desired one and prevent the fuel feed amount from being changed frequently based on the fuel feed amount, thereby allowing the gas engine to be controlled stably. In addition, it is possible to prevent the fuel feed amount from being changed suddenly and prevent a behavior of the gas engine 1 from getting unstable. As used herein, the "period" refers to a range or time of a phase angle of the gas engine.

The controller may be configured to execute fuel stop control for stopping fuel feeding to a cylinder in which misfires has occurred, for a predetermined period, and the cylinder which is a controlled target in the fuel stop control may be excluded from the candidates of the cylinders which are the controlled targets in the load equalization control. The controller may be configured to execute knocking prevention control for reducing a fuel feed amount of a cylinder in which knocking has occurred, for a predetermined period; and a cylinder which is a controlled target in the knocking prevention control is excluded from the candidates of the cylinders which are the controlled targets in the load equalization control. In such a configuration, the cylinder whose exhaust gas temperature has been decreased as a result of the fuel stop control or the knocking prevention control is not selected as the controlled targets, and the lower-temperature cylinder of the second predetermined number is selected from cylinders in which misfire or knocking has not occurred. Therefore, it is possible to the load equalization control from being disordered by and interfered by the fuel stop control or the knocking prevention control.

The above and further objects, features and advantages of the invention will more fully be apparent from the following detailed description of preferred embodiment with accompanying drawings.

### Advantageous Effect of the Invention

As described above, in accordance with the present invention, it is possible to suppress a variation in exhaust gas temperature between cylinders, equalize loads placed on the cylinders to make them close to an equal one, and to lessen interference with control executed for another purpose.

### Brief Description of the Drawings

[Fig. 1] Fig. 1 is a view showing a configuration of a control system for a gas engine according to an embodiment of the present invention.
[Fig. 2] Fig. 2 is a partial cross-sectional view of the gas engine of Fig. 1.
[Fig. 3] Fig. 3 is a flowchart showing a control content executed by a main controller of Fig. 1.
[Fig. 4] Fig. 4 is a flowchart showing a control content of load equalization control of Fig. 3.
[Fig. 5] Fig. 5 is a functional block diagram showing a configuration of a main controller according to the control content of the load equalization control of Fig. 4.

### Description of Embodiments

Hereinafter, an embodiment of the present invention will be described with reference to drawings.

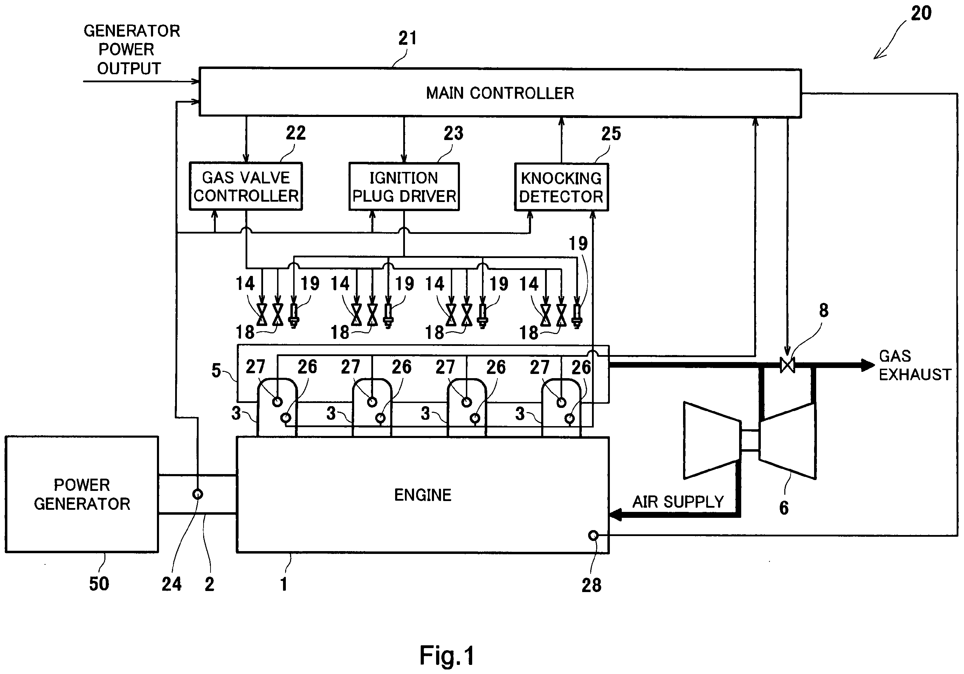

Fig. 1 is a view showing a configuration of a control system for a gas engine according to an embodiment of the present invention. As shown in Fig. 1, the gas engine 1 is a reciprocating multi-cylinder four-cycle engine which uses as a main fuel a gas fuel such as a natural gas or a city gas, and is used as, for example, a prime mover of power generation equipment. A power generator 50 is coupled to an output shaft 2 of the gas engine 1. The power generator 50 generates an AC power based on a rotational output of the gas engine 1.

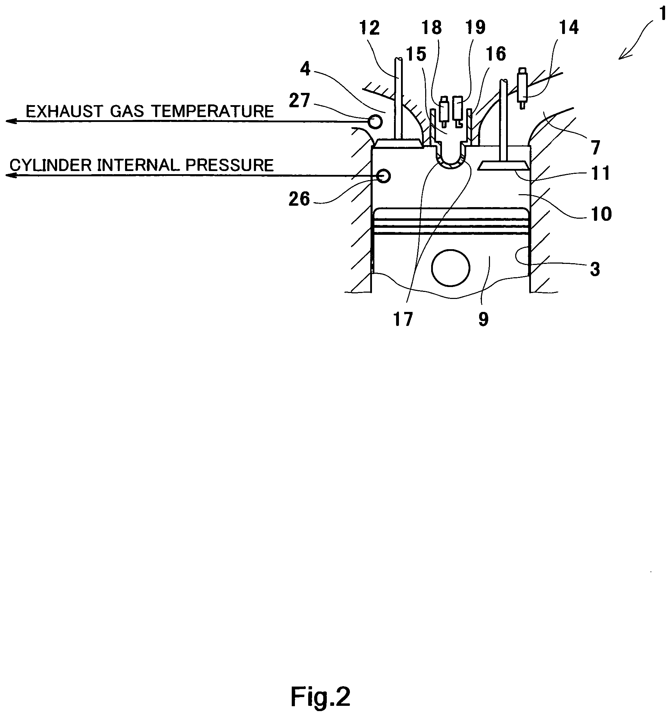

An exhaust manifold 5 is coupled to cylinders 3 of the gas engine 1 via exhaust ports 4 (see Fig. 2), respectively, and exhaust gases from the respective exhaust ports 4 are collected in the exhaust manifold 5. A turbo charger 6 is coupled to an exhaust passage extending from the exhaust manifold 5, and a high-pressure air from the turbo charger 6 can be supplied to intake ports 7 (see Fig. 2). An exhaust bypass valve 8 is provided in the exhaust passage extending from the exhaust manifold 5 to control an intake-air pressure.

Fig. 2 is a partial cross-sectional view of the gas engine 1 of Fig. 1. Fig. 2 depicts a single cylinder as a representative but other cylinders have a similar configuration. As shown in Fig. 2, a piston 9 is reciprocatably inserted into the cylinder 3. A main combustion chamber 10 is formed above the piston 9 inside the cylinder 3. The intake port 7 is coupled to the main combustion chamber 10 via intake valve(s) 11 and the exhaust port 4 is coupled to the main combustion chamber 10 via exhaust valve(s) 12. A main-fuel-feed valve 14 is provided inside the intake port 7 to inject the gas fuel.

A sub-combustion chamber 15 is adjacent to the main combustion chamber 10. The sub-combustion chamber 15 is separated from the main combustion chamber 10 by a separating wall 16, and connects with the main combustion chamber 10 through a connection hole 17 formed in the separating wall 16. In the sub-combustion chamber 15, a sub-fuel-feed valve 18 for injecting a gas fuel and an ignition plug 19 for igniting an air-fuel mixture are provided.

In accordance with the gas engine 1, in an intake stroke, an air-fuel mixture containing outside air, the high-pressure air from the turbo charger 6 (see Fig. 1), and the gas fuel injected by the main-fuel-feed valve 14 is supplied to the main combustion chamber 10, via the intake port 6, while the air-fuel mixture containing the gas fuel injected by the sub-fuel-feed valve 18 is supplied to the sub-combustion chamber 15. In a compression stroke, the air-fuel mixture is compressed in the main combustion chamber 10 and in the sub-combustion chamber 15, and then the ignition plug 19 operates at a proper timing to ignite the air-fuel mixture in the sub-combustion chamber 15. A flame generated in the sub-combustion chamber 15 propagates to an interior of the main combustion chamber 10 through the connection hole 17, to ignite the air-fuel mixture in the main combustion chamber 10. Thereby, the piston 9 moves downward (expansion stroke). Then, in an exhaust stroke, a gas is exhausted from the main combustion chamber 10 to outside via the exhaust port 4.

The gas engine 1 operates in such a manner that it goes through the above four strokes as one cycle. During one cycle, the piston 9 reciprocates twice, the output shaft 2 (see Fig. 1) rotates twice and a camshaft (not shown) constituting a valve system for driving the intake valve(s) 11 and the exhaust valve(s) 12 rotates once. A position of the piston 3, a rotational angle (crank angle) of the output shaft 2, a rotational angle of the camshaft, etc., during one cycle operation may be treated as a phase angle of the gas engine 1.

Turning back to Fig. 1, the control system 20 for the gas engine 1 according to the embodiment of the present invention includes a main controller 21 for controlling an operation of the gas engine 1 totally. The main controller 21 includes a CPU, a memory, and an input/output interface. Control programs used for governor control, fuel stop control, knocking prevention control and load equalization control as described later are stored in the memory and are executed by the CPU.

The main controller 21 is coupled to a gas valve controller 22 for outputting drive signals to the main-fuel-feed valve 14 and to the sub-fuel-feed valve 18, which are electromagnetic valves. The main controller 21 outputs command signals to the gas valve controller 22 to control valve open periods of the fuel feed valves 14 and 18, thereby controlling a fuel feed amount to the cylinder 3. The control for driving the fuel feed valves 14 and 18 is performed independently for each cylinder 3. As used herein, the term "valve open periods" refer to periods from when the fuel feed valves 14 and 18 are excited to open until the fuel feed valves 14 and 18 are demagnetized to close. During the valve open periods, the fuel feed valves 14 and 18 inject the gas fuel. As the valve open periods are longer, the amount of the fuel fed to the cylinder 3 increases. The main controller 21 is coupled to an ignition plug driver 23 for outputting a drive signal to the ignition plug 19. The main controller 21 outputs a command signal to the driver 23, thereby driving the ignition plug 19.

The control system 20 includes a phase angle detector 24 for detecting a phase angle of the gas engine 1 to control the valve open periods of the fuel feed valves 14 and 18 and an ignition timing of the air-fuel mixture by the ignition plug 14 . Signals from the phase angle detector 24 are input to the main controller 21, the gas valve controller 22 and the ignition plug driver 23. The phase angle detector 24 may be constituted by an electromagnetic pickup, a proximity switch or a rotary encoder.

The control system 20 includes a knocking detector 25 to control the fuel feed amount to the cylinder 3 according to a combustion state of the gas engine 1. The phase angle detector 24 and a cylinder internal pressure sensor 26 for detecting an internal pressure of the cylinder 3 are coupled to the knocking detector 25. The knocking detector 25 determines whether a combustion state in the cylinder 3 is "normal", "misfire", "light knocking", or " heavy knocking" in each cycle based on the phase angle of the gas engine 1 and a pressure fluctuation in the interior of the cylinder 3. "heavy knocking" indicates that a knocking with a predetermined intensity or higher, which places a relatively large burden on the corresponding cylinder, has occurred, based on the internal fluctuation in the cylinder 3. The cylinder internal pressure sensor 26 is provided individually for each cylinder 3. The knocking detector 25 determines the combustion state of each cylinder 3 individually. The main controller 21 receives as an input a result of determination made by the knocking detector 25.

The control system 20 includes an exhaust gas temperature sensor 27 to control the fuel feed amount to the cylinder 3 according to an exhaust gas temperature. A detection signal from the exhaust gas temperature sensor 27 is input to the main controller 21. The exhaust gas temperature sensor 27 is provided for each exhaust port 4, and the exhaust gas temperature of each cylinder 3 is input to the main controller 21.

In addition to the above, the main controller 21 receives an output of the power generator 50, an intake-air pressure detected by an air-intake sensor 28, etc. The main controller 21 controls an opening degree of the exhaust bypass valve so that a predetermined intake-air pressure is attained with respect to the output of the power generator 50, thereby maintaining an air-fuel ratio of the air-fuel mixture at a predetermined value according to the output of the power generator 50. The gas valve controller 22 controls a pressure of the gas fuel so that a pressure difference between the intake-air pressure and the pressure of the gas fuel reaches a predetermined value, thereby allowing the main-fuel-feed valve 14 to open and close stably regardless of a magnitude of the intake-air pressure.

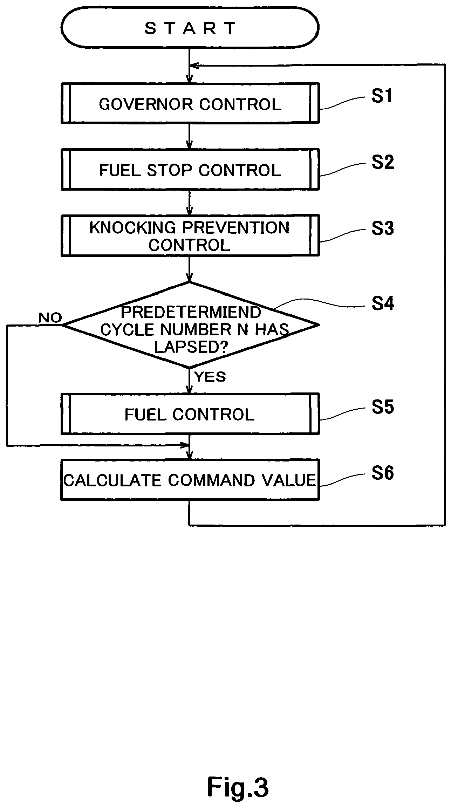

Fig. 3 is a flowchart showing a control content executed by the main controller 21. Actually, steps S1 to S6 shown in Fig. 3 are performed repetitively every predetermined minute time (e.g., 10msec) for calculation. However, for the sale of simple explanation, it is assumed that calculation is repeated every one cycle.

As shown in Fig. 3, the main controller 21 executes governor control for deciding the valve open periods of the fuel feed valves 14 and 18 of each cylinder 3 so that the gas engine 1 is operated under a load according to a desired power generator output (step S1).

The main controller 21 performs fuel stop control (step S2). An outline of the fuel stop control S2 is such that the valve open periods of the fuel feed valves 14 and 18 are set to zero during plural cycles to stop fuel feeding to a cylinder for which the knocking controller 25 determines that its combustion state is "misfire". This control can prevent a raw gas from releasing to outside continuously from a cylinder in which misfire occurred.

The main controller 21 performs the knocking prevention control (step S3). An outline of the knocking prevention control S3 is such that the valve open periods of the fuel feed valves 14 and 18 are made shorter than those decided in the governor control S1 during the plural cycles for a cylinder for which the knocking controller 25 determines that its combustion state is "heavy knocking", thereby reducing the fuel feed amount to the cylinder. This control allows an air-fuel ratio of the air-fuel mixture in the cylinder in which the heavy knocking has occurred, to shift to one in which a fuel is lean, thereby suppressing occurrence of the knocking.

It is determined whether or not cycles of a predetermined cycle number N have lapsed (step S4). If it is determined that the cycles of the predetermined cycle number N have not lapsed, command values of the valve open periods of the fuel feed valves 14 and 18 of the cylinders are calculated according to results of the above control S1 to S3 (step S6), and the fuel feed valves 14 and 18 are driven based on these command values. If it is determined that the cycles of the predetermined cycle number N have lapsed, then the main controller 21 executes load equalization control (step S5). In step S6, the command values of the valve open periods of the fuel feed valves 14 and 18 are calculated, according to results of the governor control S1, the fuel stop control S2, the knocking prevention control S3 and the load equalization control S5. In this way, the load equalization control S5 is executed after a lapse of every period of predetermined cycle number N. This can ensure a period in which the exhaust gas temperature is changed to a desired one. In addition, it is possible to prevent the fuel feed amount from being changed frequently based on the exhaust gas temperature and to stabilize a behavior of the gas engine 1.

Although Fig. 3 depicts that the governor control S1, the fuel stop control S2 and the knocking prevention control S3 are performed every one cycle, the control S1 to control S3 may be performed after a lapse of every predetermined period more than one cycle. In this case, the content of the fuel stop control S2 may be changed such that if a number of cycles in which misfire occurs for a predetermined period exceeds a predetermined threshold, the corresponding cylinder may be selected as a controlled target. The "predetermined period" may be equal to or different from the predetermined cycle number N used in the determination process in step S4. The content of the knocking prevention control S3 may be changed in the same manner.

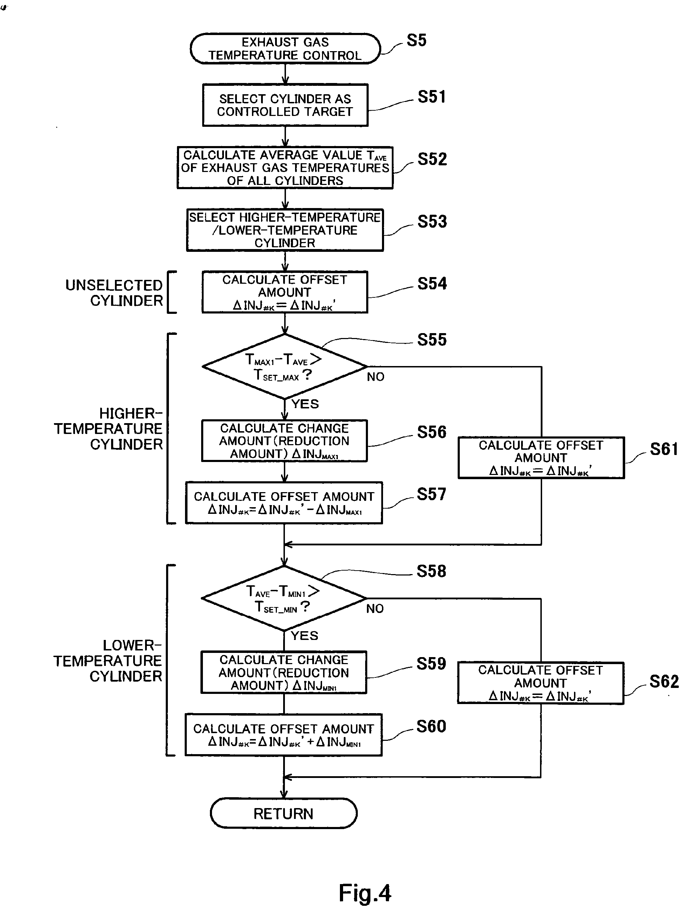

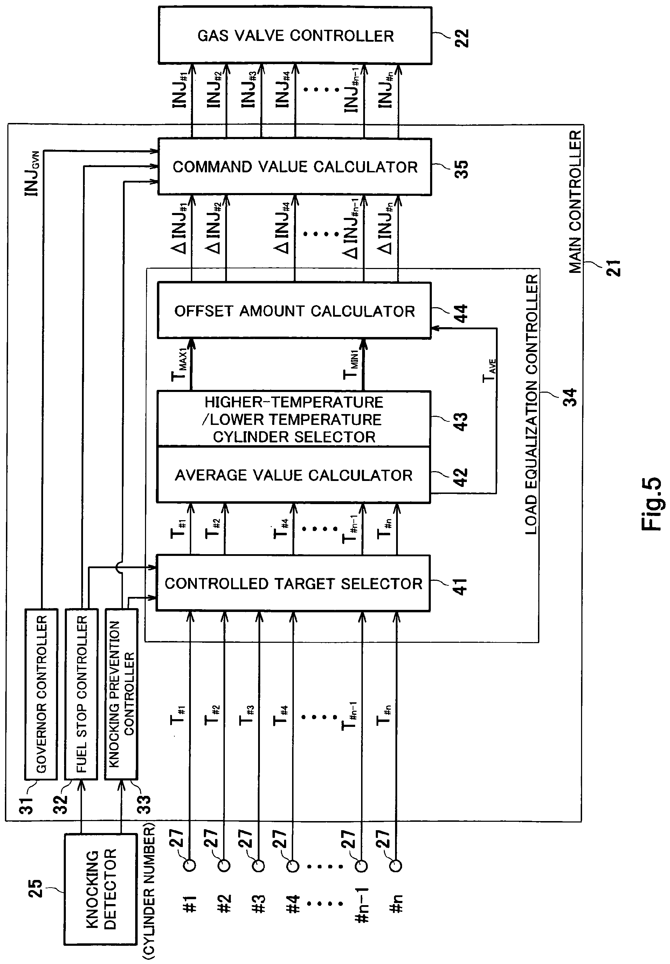

Fig. 4 is a flowchart showing a control content of the load equalization control S5 of Fig. 3. Fig. 5 is a functional block diagram showing a configuration of the main controller 21 according to the content of load equalization control S5 of Fig. 4. The load equalization control S5 is directed to make exhaust gas temperatures T_{#k} of the respective cylinders close to an equal one to make the loads imposed on the respective cylinders close to an equal one. An outline of the load equalization control S5 is such that the valve open periods of the fuel feed valves 14 and 18 corresponding to a cylinder whose exhaust gas temperature T_{#k} is higher, among the cylinders which are the controlled targets, are made shorter to reduce the fuel feed amount to the cylinder, and the valve open periods of the fuel feed valves 14 and 18 corresponding a cylinder whose exhaust gas temperature T_{#k} is lower, among the cylinders which are the controlled targets, are made longer to increase the fuel feed amount to the cylinder. To avoid interference between the load equalization control S5 and another control, a part of all of the cylinders are selected as the higher-temperature cylinder whose fuel feed amount should be changed and as the lower-temperature cylinder whose fuel feed amount should be changed, and there is a cylinder whose fuel feed amount should not be changed.

According to the above control content, as shown in Fig. 5, the main controller 21 includes as functional blocks, a governor controller 31 for performing the governor control S1, a fuel stop controller 32 for performing the fuel stop control S2, a knocking prevention controller 33 for performing the knocking prevention control S3, a load equalization controller 34 for performing the load equalization control S5 and a command value calculator 35 for calculating command values INJ_{#K} of the valve open periods of the fuel feed valves 14 and 18. The load equalization controller 34 includes as functional blocks a controlled target selector 41, an average value calculator 42, a higher-temperature/lower-temperature cylinder selector 43 and an offset amount calculator 44.

Reference symbol T_{#k} indicates an exhaust gas temperature of k-th cylinder (# k) and reference symbol INJ_{#k} indicates command values of the valve open periods of the fuel feed valves 14 and 18 of k-th cylinder (# k) (k: natural number of 1 to n, n: number of cylinders of the gas engine 1).

Hereinafter, the content of the load equalization control S5 will be described with reference to Figs. 4 and 5. Initially, the controlled target selector 41 in the main controller 21 excludes a cylinder which is a controlled target in the fuel stop control S2 in the fuel stop controller 32 and a cylinder which is a controlled target in the knocking prevention control S3 in the knocking prevention controller 33, from candidates of the cylinders which are controlled targets in the load equalization control S5 (step S51). Fig. 5 depicts a case where a third cylinder (# 3) is a controlled target of one of the control S2 and the control S3 and is excluded from the candidates of the cylinders which are controlled targets in the load equalization control S5, and also schematically shows that an exhaust gas temperature T_{#3} of the third cylinder is not considered in the following process of the load equalization control S5.

The valve open periods of the fuel feed valves 14 and 18 corresponding to the cylinder which is the controlled target in the fuel stop control S2 and the valve open periods of the fuel feed valves 14 and 18 corresponding to the cylinder which is the controlled target in the knocking prevention control S3 are shorter than those decided by the governor controller 31, and therefore their exhaust gas temperatures tend to be lower than ones under normal control. Therefore, prior to execution of the load equalization control S5, the cylinder whose exhaust gas temperature tends to be far from those of the cylinders which are the controlled targets in the load equalization control S5, is excluded preliminarily from the candidates of the cylinders which are controlled targets in the load equalization control S5. This makes it possible to prevent the load equalization control S5 from interfering with the fuel stop control S2 and the knocking prevention control S3.

When the cylinders which are the controlled targets are selected, the average value calculator 42 in the main controller 21 calculates an average value T_{AVE} of exhaust gas temperatures of all of the cylinders which are the controlled targets (step S52). In other words, in the example shown in Fig. 5, in calculation of the average value T_{AVE}, an exhaust gas temperature T_{#3} of the third cylinder (# 3) excluded from the candidates of the cylinders which are the controlled targets is not used.

The higher-temperature/lower-temperature cylinder selector 43 in the main controller 21 extracts a maximum exhaust gas temperature (expressed as reference symbols T_{MAX1}) from the exhaust gas temperatures of the cylinders which are the controlled targets and selects a cylinder corresponding to the extracted exhaust gas temperature as a higher-temperature cylinder (step S53). Concurrently with this, the higher-temperature/lower-temperature cylinder selector 43 in the main controller 21 extracts a minimum exhaust gas temperature (expressed as reference symbols T_{MIN1} from the exhaust gas temperatures of the cylinders which are controlled targets and selects a cylinder corresponding to the extracted exhaust gas temperature as a lower-temperature cylinder (step S53). Fig. 5 schematically depicts that, for example, an exhaust gas temperature T_{#1} of a first cylinder (#1) is the maximum value and the first cylinder is selected as the higher-temperature cylinder, while, for example, an exhaust gas temperature T_{#n-1} of a (n - 1)-th cylinder (#n - 1) is the minimum value and the (n - 1)-th cylinder is selected as the lower-temperature cylinder.

Then, the offset amount calculator 44 in the main controller 21 calculates offset amounts Δ INJ_{#k} of a cylinder which is not selected as the higher-temperature/lower-temperature cylinder, among the cylinders which are controlled targets (step S54). The offset amounts Δ INJ_{#k} are amounts used to change the command values INJ_{#k} of the valve open periods of the fuel feed valves 14 and 18 with respect to the reference values INJ_{GVN} decided by the governor controller 31. As can be understood from process described later (step S55 ~ S60), the offset amounts Δ INJ_{#k} are changed and compensated properly when the corresponding cylinder is selected as the higher-temperature/lower-temperature cylinder. The changed and compensated offset amounts Δ INJ_{#k} continue to be used to decide the command values INJ_{#k}, even when the load equalization control S5 is performed again after a lapse of the cycles of the predetermined cycle number N. In other words, in step S54, the offset amounts Δ INJ_{#k} of the cylinder which is not selected as the higher-temperature/lower-temperature cylinder are equal in value to offset amounts Δ INJ_{#k}' calculated in the load equalization control S5 performed previously (hereinafter simply referred to as "previous offset amounts Δ INJ_{#k}' ")( Δ INJ_{#k} = Δ INJ_{#k}' ).

Then, the offset amount calculator 44 in the main controller 21 determines whether or not an absolute value of a deviation between the exhaust gas temperature T_{MAX1} of the higher-temperature cylinder and the average value T_{AVE} is larger than a predetermined threshold T_{SET_ MAX} (step S55). If it is determined that the absolute value of the deviation is larger than a predetermined threshold T_{SET_ MAX}, the offset amount calculator 44 multiples this absolute value by the predetermined gain to calculate change amounts Δ INJ_{MAX1} for changing and compensating the offset amounts Δ INJ_{#k} of the valve open periods of the fuel feed valves 14 and 18 so that the offset amounts Δ INJ_{#k} are shorter (step S56). In step S57, the offset amount calculator 44 derives the offset amounts Δ INJ_{#k} of the valve open periods of the fuel feed valves 14 and 18 of the higher-temperature cylinder by subtracting this change amount Δ INJ_{MAX1} from the previous offset amounts Δ INJ_{#k}' (Δ INJ_{#k}= Δ INJ_{#k}' - Δ INJ_{MAX1}). On the other hand, if it is determined that the absolute value of the deviation is not more than the threshold T_{SET_ MAX}, the process moves to step S61, and the offset amounts Δ INJ_{#k} of the valve open periods of the fuel feed valves 14 and 18 of even the cylinder selected as the higher-temperature cylinder are set equal in value to the previous offset amounts Δ INJ_{#k}'(Δ INJ_{#k} = Δ INJ_{#k}').

The offset amount calculator 44 in the main controller 21 determines whether or not an absolute value of a deviation between the average value T_{AVE} and the exhaust gas temperature T_{MINI1} of the lower-temperature cylinder is larger than the predetermined threshold T_{SET}__{MIN} (step S58). If it is determined the absolute value of the deviation is larger than the predetermined threshold T_{SET_MIN}, the offset amount calculator 44 derives the change amount Δ INJ_{MIN1} for changing and compensating the offset amounts Δ INJ_{#k} of the valve open periods of the fuel feed valves 14 and 18 by multiplying this absolute value by a predetermined gain (step S59). In the following step S60, the offset amount calculator 44 derives the change amount Δ INJ_{#k} of the valve open periods of the fuel feed valves 14 and 18 of the lower-temperature cylinder by adding this change amount Δ INJ_{MIN1} to the previous offset amounts Δ INJ_{#k}' (Δ INJ_{#k} = Δ INJ_{#k}' + Δ INJ_{MIN1}), and the load equalization control S5 terminates. On the other hand, if the absolute value of the deviation is not more than the threshold T_{SET_ MIN}, the process moves to step S62. The offset amounts Δ INJ_{#k} of the valve open periods of the fuel feed valves 14 and 18 of even the cylinder selected as the lower-temperature cylinder are set to equal in value to the previous offset amounts Δ INJ_{#k}' (Δ INJ_{#k} = Δ INJ_{#k}'), and the load equalization control S5 terminates.

The order of step S52 and step S53 is not limited to that shown in Fig. 4, but may be reversed. The same applies to a relationship among step S54, step group S55 to S57 and step group S58 to S60.

With reference to Figs. 3 and 5, when the load equalization control S5 terminates, the command value calculator 35 in the main controller 21 calculates command values INJ_{#k} of the valve open periods of the fuel feed valves 14 and 18 of each cylinder 3 based on reference values INJ_{GVN} decided by the governor controller 31, the above offset amounts Δ INJ_{#k} and control results of the fuel stop controller 32 and the knocking prevention controller 33 (step S6).

For the cylinder which is a controlled target of the load equalization control S5, the command value calculator 35 calculates the command values INJ_{#k} by adding the offset amounts Δ INJ_{#k} to the reference values INJ_{GVN} of the valve open periods (INJ_{#k} = INJ_{GVN} + Δ INJ_{#k}). As indicated by step S57 and S60, the offset amounts Δ INJ_{#k} may be positive values or negative values.

The exhaust gas temperature of the higher-temperature cylinder decreases because the fuel feed amount is changed and compensated to decrease in the load equalization control S5 executed in the present case, while the exhaust gas temperature of the lower-temperature cylinder increases because the fuel feed amount is changed and compensated to increase in the load equalization control S5 executed in the present case. In this way the exhaust gas temperatures of the respective cylinders 3 are made close to an equal one and the loads placed on the cylinders 3 are made close to an equal one. The change amount Δ INJ_{MAX1} of the fuel feed amount of the higher-temperature cylinder and the change amount Δ INJ_{MIN1} of the fuel feed amount of the lower-temperature cylinder are each decided as a deviation between the exhaust gas temperature of the cylinder and the average value T_{AVE}. The above gains used to calculate the change amount Δ INJ_{MAX1} and the change amounts Δ INJ_{MIN1}, respectively, are preset properly so that the exhaust gas temperature of the higher-temperature cylinder and the exhaust gas temperature of the lower-temperature cylinder can be made close to the average value T_{AVE} effectively.

The offset amounts Δ INJ_{#k} of even the cylinder selected as the higher-temperature/lower-temperature cylinder is not changed from the previous offset amounts Δ INJ_{#k}', if a deviation between its exhaust gas temperature and the average value is not more than the threshold. Therefore, the corresponding command values INJ_{#k} are not changed from the command values set during a period from when the previous load equalization control S5 is initiated until when the present load equalization control S5 is initiated. As should be noted, in a case where the exhaust gas temperature T_{MAXI} of the higher-temperature cylinder and the exhaust gas temperature T_{MIN1} of the lower-temperature cylinder are not far from the average value T_{AVE} and a variation in the exhaust gas temperatures falls within an allowable range, changing and compensating the fuel feed amount according to the exhaust gas temperature is not performed. Therefore, interference between the load equalization control S5 and the governor control S1 is lessened.

The offset amounts Δ INJ_{#k} of the cylinder which is not selected as the higher-temperature/lower-temperature cylinder are not changed from the offset amounts Δ INJ_{#k}' decided previously, the corresponding command values INJ_{#k} (in the example shown in Fig. 5, INJ_{#2}, INJ_{#4}, INJ_{#n}) are not changed from the command values set during a period from when the previous load equalization control S5 is initiated until the present load equalization control S5 is initiated.

For the cylinder which is the controlled target in the fuel stop control S2 or the knocking prevention control S3 and is excluded from the candidates of the controlled targets in the load equalization control S5, the command values INJ_{#k} (in the example shown in Fig. 5, INJ_{#3}) are decided according to the change amounts decided in the control S2 or S3 and the reference values INJ_{GVN} decided by the governor controller 31.

In accordance with the command values INJ_{#k} decided as described above, the main controller 21 outputs a control signal to the gas valve controller 22, so that the valve open periods of the fuel feed valves 14 and 18 of each cylinder 3 reach ones according to the command values INJ_{#k}. Once the load equalization control S5 is initiated, the fuel feed valves 14 and 18 continue to be driven in accordance with these command values during a period until next load equalization control S5 is initiated after a lapse of the cycles of the predetermined cycle number N.

Once the load equalization control S5 is initiated, it is executed again along a flow shown in Fig. 4, after a lapse of the cycles of the predetermined cycle number N. Thereby, the higher-temperature/lower-temperature cylinder is updated, and the command values INJ_{#k} of the valve open periods are updated.

Once the cylinders are selected as the higher-temperature cylinder and the lower-temperature cylinder whose fuel feed amounts should be changed and compensated, the change amounts Δ INJ_{MAX1} and Δ INJ_{MIN1} continue to be included in the offset amounts decided in the next and following load equalization control S5 executed. Since the gas engine 1 continues to be operated for a long time while repeating the above load equalization control S5 many times, the exhaust gas temperatures of the cylinders are equalized and made close to an equal one and the loads placed on the respective cylinders are equalized and made close to an equal one.

In the control system 20, as indicated by step S53 of Fig. 4 and the functional block 43 of Fig. 5, the number of cylinder whose fuel feed amount is increased according to the exhaust gas temperature in every period of the predetermined cycle number N and the number of cylinder whose fuel feed amount is decreased according to the exhaust gas temperature in every period of the predetermined cycle number N are each set to 1. Thus, only the cylinder whose exhaust gas temperature is farthest from the average value to a positive side and only the cylinder whose exhaust gas temperature is farthest from the average value to a negative side are targets whose fuel feed amounts should be changed and compensated. Therefore, an advantage that the exhaust gas temperatures of the cylinders are made close to an equal one to make the loads placed on the cylinders close to an equal one and an advantage that interference between the load equalization control S5 and the governor control S1 is minimized can be both achieved.

Although the embodiment of the control system 20 for the gas engine 1 of the present invention has been described above, the above configuration may be changed suitably so long as it is within the scope of the present invention as defined in the appended claims.

For example, although in this embodiment, the number of higher-temperature cylinder whose fuel feed amount should be reduced and the number of lower-temperature cylinder whose fuel feed amount should be increased are each set to 1, both of the above advantages can be achieved even if the number of the higher-temperature cylinder and the number of lower-temperature cylinder are changed. The control system 20 may be configured to suppress the fuel feed amounts corresponding to all of the cylinders from being changed according to the exhaust gas temperatures, and to select a cylinder whose exhaust gas temperature is significantly far from the average value without fail, as the cylinder whose fuel feed amount should be changed.

In other words, the number of cylinder selected as the higher-temperature cylinder and the number of cylinder selected as the lower-temperature cylinder may be preset so that a sum of them is at least less than the number of all cylinders. Or, several cylinders including a cylinder whose exhaust gas temperature is highest, more preferably, several cylinders whose exhaust gas temperatures are higher in decreasing order from the highest temperature may be selected as higher-temperature cylinders, while several cylinders including a cylinder whose exhaust gas temperature is lowest, more preferably, several cylinders whose exhaust gas temperatures are lower in increasing order from the lowest temperature may be selected as lower-temperature cylinders. In that case, both of the above advantages could be achieved. Since interference between the load equalization control S5 and the governor control S1 is lessened as the number of cylinder whose fuel feed amount is changed is made less. Therefore, the configuration of the above embodiment is able to lessen the interference most effectively.

Although in the load equalization control S5, the higher-temperature/lower-temperature cylinders are selected and the average value T_{AVE} is calculated by using the exhaust gas temperature T_{#k} detected in the cycle just after a lapse of the cycles of the predetermined cycle number N, the exhaust gas temperatures T_{#k} of the respective cylinders which are detected for the cycles of the predetermined cycle number N are averaged , and the subsequent process may be performed using the averaged exhaust gas temperature. Thus, even if the exhaust gas temperature becomes a higher or lower temperature accidentally only in a certain cycle in which the exhaust gas temperature is detected, this cylinder is prevented from being selected as the higher-temperature/lower-temperature cylinder. Thus, the load equalization control S5 can be executed stably.

Although the valve open periods of both of the main-fuel-feed valve 14 and the sub-fuel-feed valve 18 are changed according to the exhaust gas temperatures as described above, the fuel feed valve whose valve open period should be changed in the load equalization control S5 may be either one of the main-fuel-feed valve 14 and the sub-fuel-feed valve 18.

Although in this embodiment, a so-called a sub-combustion chamber and spark ignition method in which the ignition plug 19 ignites the air-fuel mixture in the sub-combustion chamber 15 is used as a method for igniting the air-fuel mixture, other method may be used. For example, a so-called pilot fuel injection method may be used, in which a gas engine is provided with a pilot fuel injection valve for injecting a high-pressure gas fuel and the high-pressure gas fuel is injected by the pilot fuel injection valve to a compressed air-fuel mixture in the combustion chamber.

The use of the gas engine 1 is not limited to the prime mover in the power generation equipment but may be prime movers in other facilities or apparatuses.

### Industrial Applicability

As should be appreciated from the above, the present invention achieves advantages that a variation in exhaust gas temperature between cylinders is suppressed to equalize loads placed on the cylinders to make them close to an equal one, and interference with control being executed for another purpose is lessened. The present invention is particularly suitably applied to a gas engine used as a prime mover in power generation equipment.

### Reference Citation Lists

- 1: gas engine

- 3: cylinder
- 14: main-fuel-feed valve
- 18: sub-fuel-feed valve
- 20: control system
- 21: main controller
- 22: gas valve controller
- 24: phase angle detector
- 27: exhaust gas temperature sensor
- 31: governor controller
- 32: fuel stop controller
- 33: knocking prevention controller
- 34: load equalization controller
- 35: command value calculator
- 41: controlled target selector
- 42: average value calculator
- 43: higher-temperature/lower-temperature cylinder selector
- 44: change amount calculator
- T_{#k}: exhaust gas temperature of k-th cylinder
- T_{AVE}: average value
- Δ INJ_{MAX1}, Δ INJ_{MIN1}: change amounts
- Δ INJ_{#k}: offset amounts of k-th cylinder
- INJ_{GVN}: reference values
- INJ_{#k}: command values of k-th cylinder
- S1: governor control
- S2: fuel stop control
- S3: knocking prevention control
- S5: load equalization control

## Claims

1. A control system for a gas engine (1) comprising:
an exhaust gas temperature detector (27) for detecting exhaust gas temperatures (T) of a plurality of cylinders (3) in the gas engine;
fuel feed devices (14, 18) respectively corresponding to the plurality of cylinders; a controller (21) for driving the fuel feed devices; and
a knocking detector (25) coupled to an engine phase angle detector (24) and to a cylinder internal pressure sensor (26), and configured to determine for each of said cylinders (3) whether misfire has occurred therein;
the controller (21) being configured to execute load equalization control (S5) in every period of a predetermined cycle number such that an average value (T_{AVE}) of exhaust gas temperatures of the cylinders (3), which are the controlled targets, is calculated and that a fuel feed amount corresponding to a higher-temperature cylinder of a first predetermined number, which is selected to include the cylinder with the highest exhaust gas temperature, among cylinders which are controlled targets, is reduced based on the deviation between the exhaust gas temperature of said higher-temperature cylinder and the average value, and a fuel feed amount corresponding to a lower-temperature cylinder of a second predetermined number, which is selected to include the cylinder with the lowest exhaust gas temperature, among the cylinders which are the controlled targets, is increased based on the deviation between the average value and the exhaust gas temperature of the lower-temperature cylinder, wherein the sum of the first and second predetermined numbers is less than the number of cylinders so that there is at least a cylinder whose fuel amount is not changed,
wherein the controller (21) is configured to execute fuel stop control (S2) for stopping fuel feeding to a cylinder (3) in which misfire has occurred, for a predetermined period, concurrently with the load equalization control (S5), and
wherein a cylinder (3) which is a controlled target in the fuel stop control (S2) is excluded from the candidates of the cylinders which are the controlled targets in the load equalization control (S5).

2. The control system for the gas engine according to claim 1,
wherein the controller (21) is configured to, in the load equalization control (S5), calculate an average value (T_{AVE}) of exhaust gas temperatures of the cylinders (3) which are the controlled targets; and
the controller (21) is configured not to change the fuel feed amount of the higher-temperature cylinder if a deviation between the average value and the exhaust gas temperature of the higher-temperature cylinder is less than a predetermined value, and not to change the fuel feed amount of the lower-temperature cylinder if a deviation between the average value and the exhaust gas temperature of the lower-temperature cylinder is less than the predetermined value.

3. The control system for the gas engine according to claim 1,
wherein the controller (21) is configured to, in the load equalization control, select the higher-temperature cylinder, and the lower-temperature cylinder, among the cylinders (3) which are the controlled targets, in every predetermined period, and to continue to change the fuel feed amounts of the selected cylinders for the predetermined period.

4. The control system for the gas engine according to claim 1,
wherein
said knocking detector (25) is configured to determine for each of said cylinders (3) whether knocking has occurred therein;
the controller (21) is configured to execute knocking prevention control for reducing a fuel feed amount of a cylinder (3) in which knocking has occurred, for a predetermined period; and
a cylinder (3) which is a controlled target in the knocking prevention control (S3) is excluded from the candidates of the cylinders which are the controlled targets in the load equalization control (S5).

## Patentansprüche

1. Steuersystem für einem Gasmotor (1), umfassend:
einen Abgastemperaturdetektor (27) zum Erfassen von Abgastemperaturen (T) einer Vielzahl von Zylindern (3) in dem Gasmotor;
Kraftstoffzufuhrvorrichtungen (14, 18), die jeweils der Vielzahl von Zylindern entsprechen; eine Steuerung (21) zum Antreiben der Kraftstoffzufuhrvorrichtungen; und
einen Klopfdetektor (25), der mit einem Motorphasenwinkeldetektor (24) und mit einem Zylinderinnendrucksensor (26) gekoppelt ist und konfiguriert ist, um für jeden der Zylinder (3) zu bestimmen, ob darin eine Fehlzündung aufgetreten ist;
wobei die Steuerung (21) so konfiguriert ist, dass sie eine Lastausgleichssteuerung (S5) in jeder Periode einer vorbestimmten Zyklusanzahl ausführt, so dass ein Durchschnittswert (T_{AVE}) von Abgastemperaturen der Zylinder (3), die die gesteuerten Ziele sind, berechnet wird, und so dass eine Kraftstoffzufuhrmenge reduziert wird, die einem Zylinder mit höherer Temperatur einer ersten vorbestimmten Anzahl entspricht, der ausgewählt ist, um einen Zylinder mit der höchsten Abgastemperatur unter den Zylindern, die gesteuerte Ziele sind, zu umfassen, basierend auf der Abweichung zwischen der Abgastemperatur des Zylinders mit höherer Temperatur und dem Durchschnittswert, und eine Kraftstoffzuführmenge erhöht wird, die einem Zylinder mit niedrigerer Temperatur einer zweiten vorbestimmten Anzahl entspricht, die ausgewählt ist, um einen Zylinder mit der niedrigsten Abgastemperatur unter den Zylindern, die die gesteuerten Ziele sind, zu umfassen, basierend auf der Abweichung zwischen dem Durchschnittswert und der Abgastemperatur des Zylinders mit der niedrigeren Temperatur, wobei die Summe der ersten und zweiten vorbestimmten Anzahl kleiner als die Anzahl der Zylinder ist, so dass es zumindest einen Zylinder gibt, dessen Kraftstoffzufuhrmenge nicht geändert wird,
wobei die Steuerung (21) so konfiguriert ist, dass sie gleichzeitig mit der Lastausgleichssteuerung (S5) eine Kraftstoffstoppsteuerung (S2) zum Stoppen der Kraftstoffzufuhr an einen Zylinder (3), in dem Fehlzündungen aufgetreten sind, für einen vorbestimmten Zeitraum ausführt, und
wobei ein Zylinder (3), der ein gesteuertes Ziel in der Kraftstoffstoppsteuerung (S2) ist, von den Kandidaten der Zylinder ausgeschlossen wird, die die gesteuerten Ziele in der Lastausgleichssteuerung (S5) sind.

2. Steuersystem für den Gasmotor nach Anspruch 1, wobei
die Steuerung (21) konfiguriert ist, um in der Lastausgleichssteuerung (S5) einen Durchschnittswert (T_{AVE}) von Abgastemperaturen der Zylinder (3) zu berechnen, die die gesteuerten Ziele sind, und
die Steuerung (21) so konfiguriert ist, dass sie die Kraftstoffzufuhrmenge des Zylinders mit der höheren Temperatur nicht ändert, wenn eine Abweichung zwischen dem Durchschnittswert und der Abgastemperatur des Zylinders mit höherer Temperatur kleiner als ein vorbestimmter Wert ist, und die Kraftstoffzufuhrmenge des Zylinders mit der niedrigeren Temperatur nicht zu ändern, wenn eine Abweichung zwischen dem Durchschnittswert und der Abgastemperatur des Zylinders mit niedrigerer Temperatur kleiner als der vorbestimmte Wert ist.

3. Steuersystem für den Gasmotor nach Anspruch 1, wobei
die Steuerung (21) so konfiguriert ist, dass sie in der Lastausgleichssteuerung den Zylinder mit der höheren Temperatur und den Zylinder mit der niedrigeren Temperatur unter den Zylindern (3), die die gesteuerten Ziele sind, in jeder vorbestimmten Zeitspanne auswählt, und die Kraftstoffzufuhrmengen der ausgewählten Zylinder für die vorbestimmte Zeitspanne weiter ändert.

4. Steuersystem für den Gasmotor nach Anspruch 1, wobei
der Klopfdetektor (25) so konfiguriert ist, dass er für jeden der Zylinder (3) bestimmt, ob darin ein Klopfen aufgetreten ist;
die Steuerung (21) so konfiguriert ist, dass sie eine Klopfverhinderungssteuerung zum Reduzieren einer Kraftstoffzufuhrmenge eines Zylinders (3), in dem ein Klopfen aufgetreten ist, für eine vorbestimmte Zeitspanne ausführt; und
ein Zylinder (3), der ein gesteuertes Ziel in der Klopfverhinderungssteuerung (S3) ist, von den Kandidaten der Zylinder ausgeschlossen wird, die die gesteuerten Ziele in der Lastausgleichssteuerung (S5) sind.

## Revendications

1. Système de régulation pour moteur à gaz (1) comprenant :
un détecteur de température de gaz d'échappement (27) destiné à détecter la température (T) de gaz d'échappement issus d'une pluralité de cylindres (3) du moteur à gaz,
des dispositifs d'admission de combustible (14, 18) correspondant respectivement à la pluralité de cylindres,
un organe de commande (21) destiné à piloter les dispositifs d'admission de combustible, et
un détecteur de cliquetis (25) couplé à un détecteur d'angle de phase de moteur (24) et à un détecteur de pression interne de cylindre (26), et conçu pour déterminer, pour chacun desdits cylindres (3), s'il s'y est produit un raté d'allumage ;
l'organe de commande (21) étant conçu pour exécuter, dans chaque période d'un nombre prédéterminé de cycles, une commande d'égalisation de charge (S5) visant à calculer une valeur moyenne (T_{AVE}) de la température de gaz d'échappement issus des cylindres (3), consistant en des cibles régulées, et à réduire une quantité d'admission de combustible correspondant à un cylindre de température supérieure parmi un premier nombre prédéterminé, choisi pour comprendre un cylindre présentant la température de gaz d'échappement la plus élevée parmi les cylindres consistant en des cibles régulées, compte tenu de l'écart entre la température de gaz d'échappement dudit cylindre de température supérieure et la valeur moyenne, et visant à augmenter la quantité d'admission de combustible correspondant à un cylindre de température inférieure parmi un deuxième nombre prédéterminé, choisi pour comprendre le cylindre présentant la température de gaz d'échappement la plus basse parmi les cylindres consistant en des cibles régulées, compte tenu de l'écart entre la valeur moyenne et la température de gaz d'échappement du cylindre de température inférieure, la somme desdits premier et deuxième nombres prédéterminés étant inférieure au nombre de cylindres de façon qu'il y ait au moins un cylindre dont la quantité d'admission de combustible reste inchangée,
ledit organe de commande (21) étant conçu pour exécuter une commande d'arrêt d'apport de combustible (S2) pour arrêter l'apport de combustible à un cylindre (3) dans lequel se sont produits des ratés d'allumage, pendant une période prédéterminée, simultanément à la commande d'égalisation de charge (S5), et
un cylindre (3) consistant en une cible régulée lors de la commande d'arrêt d'apport de combustible (S2) étant exclu des cylindres candidats qui sont des cibles régulées lors de la commande d'égalisation de charge (S5).

2. Système de régulation pour moteur à gaz selon la revendication 1, dans lequel l'organe de commande (21) est conçu pour calculer, lors de la commande d'égalisation de charge (S5), une valeur moyenne (T_{AVE}) de la température de gaz d'échappement issus des cylindres (3) consistant en des cibles régulées, et
l'organe de commande (21) est conçu pour ne pas changer la quantité d'admission de combustible du cylindre de température supérieure si l'écart entre la valeur moyenne et la température de gaz d'échappement du cylindre de température supérieure est inférieur à une valeur prédéterminée, et pour ne pas changer la quantité d'admission de combustible du cylindre de température inférieure si l'écart entre la valeur moyenne et la température de gaz d'échappement du cylindre de température inférieure est inférieur à la valeur prédéterminée.

3. Système de régulation pour moteur à gaz selon la revendication 1,
dans lequel l'organe de commande (21) est conçu pour choisir, lors de la commande d'égalisation de charge, le cylindre de température supérieure et le cylindre de température inférieure, parmi les cylindres (3) consistant en des cibles régulées, dans chaque période prédéterminée, et pour continuer de changer la quantité d'admission de combustible desdits cylindres choisis, pendant la période prédéterminée.

4. Système de régulation pour moteur à gaz selon la revendication 1, dans lequel
ledit détecteur de cliquetis (25) est conçu pour déterminer, pour chacun desdits cylindres (3), s'il s'y est produit un cliquetis,
l'organe de commande (21) est conçu pour exécuter une commande de prévention du cliquetis afin de réduire une quantité d'admission de combustible d'un cylindre (3) dans lequel s'est produit un cliquetis, pendant une période prédéterminée, et
un cylindre (3) consistant en une cible régulée lors de la commande de prévention du cliquetis (S3) est exclu des cylindres candidats consistant en des cibles régulées lors de la commande d'égalisation de charge (S5).
